# EUROPÄISCHE PATENTANMELDUNG

(11) **EP 1 690 671 A2**
(43) Veröffentlichungstag der Anmeldung: **16.08.2006**
(21) Anmeldenummer: 05026541.2
(22) Anmeldetag: 06.12.2005
(51) Int. Cl.: B30B 1/26, B30B 15/28, B29C 65/00

(54) **Hubeinrichtung mit Federelement für eine Arbeitsstation einer Verpackunsmaschine**

(30) Priorität: 14.02.2005 DE 102005006783
(71) Anmelder: UHLMANN PAC-SYSTEME GmbH & Co. KG, 88471 Laupheim (DE)
(72) Erfinder: Laupheimer, Ulrich, 88433 Schemmerhofen (DE); Lämmle, Kurt, 89584 Ehingen (DE); Ogger, Egon, 88433 Altheim (DE); Götz, Werner, 88485 Achstetten (DE)
(74) Vertreter: Hentrich, Swen

(57) **Zusammenfassung**

Die Erfindung betrifft eine Arbeitsstation mit einem Stationsrahmen (2), in dem über Führungssäulen (3) eine Sockeltraverse (4) und eine Deckeltraverse (5) miteinander verbunden sind, zwischen denen auf den Führungssäulen (3) höhenverstellbar ein Hubtisch (6) angeordnet ist. Der Hubtisch (6) ist zweiteilig mit einem Hubtisch-Oberteil (9) und einem Hubtisch-Unterteil (10) gebildet, zwischen denen ein Federelement 1 angeordnet ist, das in seiner Ruhelage einen gegenseitigen Abstand (13) von dem Hubtisch-Oberteil (9) und dem Hubtisch-Unterteil (10) bewirkt.

## Beschreibung

Die Erfindung betrifft eine Arbeitsstation mit einem Stationsrahmen, in dem über Führungssäulen eine Sockeltraverse und eine Deckeltraverse miteinander verbunden sind, zwischen denen auf den Führungssäulen höhenverstellbar ein Hubtisch angeordnet ist.

Derartige Arbeitsstationen sind aus der Praxis bekannt, die beispielsweise dazu genutzt werden, zwischen dem Hubtisch und der Deckeltraverse beziehungsweise diesen zugeordneten Werkzeugen zu bearbeitende Werkstoffe wie Folienbahnen hindurchzuführen, wobei die Höhenverstellbarkeit des Hubtisches dazu dient, die beiden Werkzeuge zu öffnen und zu schließen. Wird eine derartige Arbeitsstation beispielsweise zum Siegeln von einer gefüllte Näpfe aufweisenden Formfolie mit einer Deckfolie genutzt, können Produktionsstörungen auftreten, wenn sich Produkte außerhalb der Näpfe oder Fremdkörper zwischen den Werkzeugen befindet.

Der Erfindung liegt daher die Aufgabe zugrunde, eine Arbeitsstation der eingangs genannten Art so auszubilden, daß die Dauer und Auswirkungen von Produktionsstörungen insbesondere zeitlich begrenzt werden können unter möglichst weitgehender Vermeidung von Beschädigungen der die Produktionsstörung verursachenden Produkte.

Diese Aufgabe wird nach der Erfindung bei einer Arbeitsstation der eingangs genannten Art dadurch gelöst, daß der Hubtisch zweiteilig mit einem Hubtisch-Oberteil und einem Hubtisch-Unterteil gebildet ist, zwischen denen ein Federelement angeordnet ist, das in seiner Ruhelage einen gegenseitigen Abstand von dem Hubtisch-Oberteil und dem Hubtisch-Unterteil bewirkt.

Mit dieser Gestaltung ist der Vorteil verbunden, daß aufgrund der zweiteiligen Ausführung mit dem zwischen den beiden Bauteilen angeordneten Federelement eine gestufte Krafteinleitung bei den Werkzeugen erfolgt, so daß im Falle einer Siegelstation zunächst eine Vorsiegelung gegeben ist, bei der es zu einem Kontakt zwischen dem oberen und dem unteren (Siegel)-Werkzeug kommt, wobei die dabei von den Werkzeugen ausgeübte Kraft durch die Vorspannung des Federelementes bestimmt wird. Insbesondere besteht auch die Möglichkeit, während dieses vorzeitigen Kontaktes bereits eine Erwärmung der Deckfolie zu bewirken. Während des Vorsiegelns können Lufteinschlüsse zwischen Form- und Deckfolie entweichen, so daß einer Faltenbildung entgegen gewirkt. Darüberhinaus erzeugen außerhalb der Näpfe befindliche Produkte eine Störung der Vorsiegelung, die beispielsweise über das Federelement detektiert werden kann, das zweckmäßigerweise als Druckfeder gestaltet ist.

Ganz besonders bevorzugt ist eine Ausführungsform der Erfindung, die dadurch gekennzeichnet ist, daß dem einen von dem Hubtisch-Oberteil oder Hubtisch-Unterteil eine Schaltfahne und dem anderen ein Sensor zur Erfassung einer Lageänderung der Schaltfahne zugeordnet ist. Dieser Sensor erzeugt ein Signal, sobald eine Relativbewegung zwischen dem Hubtisch-Oberteil und dem Hubtisch-Unterteil stattfindet, wobei dieses Signal ausgenutzt werden kann, eine Überlastsituation anzuzeigen. Dies geschieht in einfacher Weise dadurch, daß eine zeitaufgelöste Erfassung durchgeführt. Wird wird nämlich das Signal innerhalb eines vorgegebenen Zeitfensters erzeugt, verläuft die Krafteinleitung in die Werkzeuge ordnungsgemäß, so daß von der Arbeitsstation ein ordnungsgemäßer Takt ausgeführt wird. Wird das Signal des Sensors jedoch außerhalb eines vorbestimmten Zeitfensters erzeugt, ist dies ein Zeichen für eine Störung, so daß durch die Kenntnis dieser Störung geeignete Maßnahmen ergriffen werden können, nämlich beispielsweise das Stoppen einer weiteren Zustellbewegung der beiden Werkzeuge relativ zueinander.

Vorteilhaft ist es dabei auch, wenn die Schaltfahne einstellbar, das heißt hinsichtlich ihrer Lage gegenüber dem sie tragenden Hubtisch-Oberteil oder Hubtisch-Unterteil veränderbar befestigt ist. Durch diese Einstellbarkeit ist die Möglichkeit geschaffen, die zur Signalerzeugung erforderliche Lageänderung der Schaltfahne zu beeinflussen.

Die Höhenverstellung des Arbeitstisches erfolgt in einfacher Weise mittels einer Antriebswelle, wobei die Antriebswelle als Exzenterwelle gestaltet ist, auf der eine den Hubtisch tragende Pleuelstange angeordnet ist. Der Antriebswelle ist ein Antriebmotor mit einer Motorsteuerung zugeordnet, um schnell und flexibel den Antrieb beeinflussen zu können. Dazu ist der Sensor über Datenleitungen mit der Motorsteuerung verbunden zur Auswertung der Sensordaten hinsichtlich des Antriebs des Antriebsmotors über die Motorsteuerung.

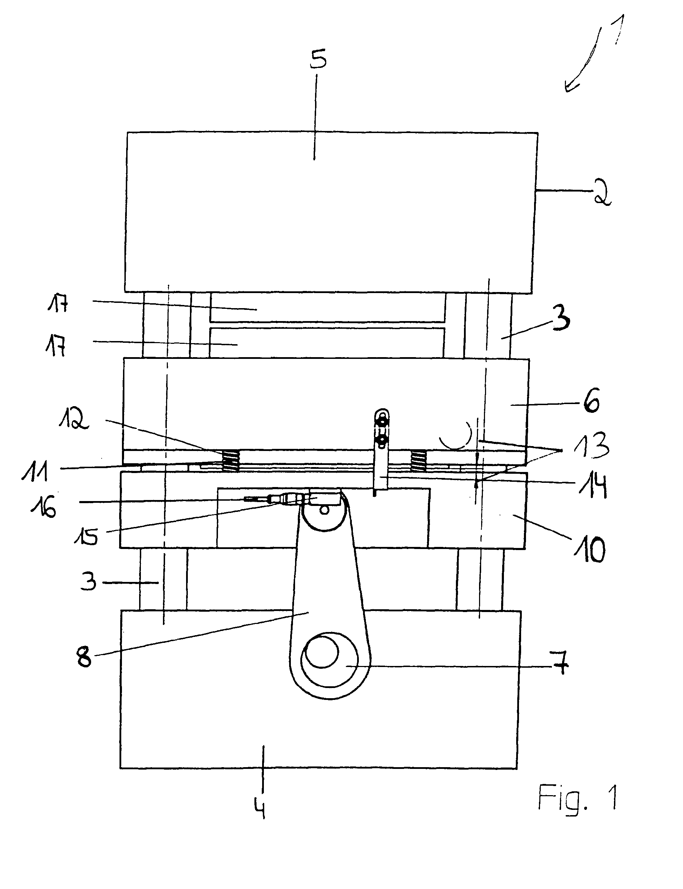

Im folgenden wird die Erfindung an einem in der Zeichnung dargestellten Ausführungsbeispiel näher erläutert; die einzige Fig. 1 zeigt in einer Seitenansicht eine schematische Darstellung der Arbeitsstation.

In der Fig. 1 ist eine Arbeitsstation 1 abgebildet, die einen Stationsrahmen 2 aufweist, in dem über Führungssäulen 3 eine Sockeltraverse 4 und eine Deckeltraverse 5 miteinander verbunden sind. Zwischen der Sockeltraverse 4 und der Deckeltraverse 5 ist ein Hubtisch 6 angeordnet, der auf den Führungssäulen 3 höhenverstellbar ist, wobei zur Höhenverstellung eine als Exzenterwelle 7 gestaltete Antriebswelle vorgesehen ist, auf der eine den Hubtisch 6 tragende Pleuelstange 8 angeordnet ist. Der Antriebswelle ist ein Antriebsmotor mit einer Motorsteuerung zugeordnet.

Wie die Fig. 1 zeigt, ist der Hubtisch 6 zweiteilig mit einem Hubtisch-Oberteil 9 und einem Hubtisch-Unterteil 10 gebildet, zwischen denen ein als Druckfeder 11 gestaltetes Federelement 12 angeordnet ist, das in seiner Ruhelage einen gegenseitigen Abstand 13 von dem Hubtisch-Oberteil 9 und dem Hubtisch-Unterteil 10 bewirkt. Bei dem in der Zeichnung dargestellten Ausführungsbeispiel ist dem Hubtisch-Oberteil 9 eine Schaltfahne 14 und dem Hubtisch-Unterteil 10 ein Sensor 15 zur Erfassung einer Lageänderung 14 der Schaltfahne 14 zugeordnet, wobei die Lage 9 der Schaltfahne 15 an dem Hubtisch-Oberteil 16 einstellbar ist. Der Sensor 15 ist über Datenleitungen 16 mit der Motorsteuerung verbunden zur Auswertung der Sensordaten hinsichtlich des Antriebs des Antriebsmotors über die Motorsteuerung.

Dem Hubtisch 6 sowie der Deckeltraverse 5 ist jeweils ein Werkzeug 17 zugeordnet, zwischen denen eine Folienbahnförderstrecke verläuft.

Eine derartig gestaltete Arbeitsstation 1 lässt sich mit Vorteilen insbesondere als Siegelstation einsetzen, so daß nachfolgend die Betriebsweise einer derartigen Arbeitsstation 1 geschildert wird, wenn zwischen den Werkzeugen 17 eine mit Produkten gefüllte Näpfe aufweisende Formfolie sowie eine Deckfolie hindurchgeführt wird. Sobald die Formfolie und die Deckfolie in der Arbeitsstation 1 richtig platziert sind, wird über die Motorsteuerung die Verstellung des Hubtisches 6 initiiert, wobei es zunächst durch das Federelement 12 zu einer Vorsiegelung kommt, bei der das dem Hubtisch 6 zugeordnete Werkzeug mit einer durch die Druckfeder 11 bestimmten Kraft gegen das andere Werkzeug 17 gepresst wird, wobei dieser Vorgang der Vorsiegelung dazu genutzt werden kann, die Deckfolie zu erwärmen und das Entweichen von Lufteinschlüsen zwischen Form- und Deckfolie zu ermöglichen. Bei einer fortgesetzten Verstellung des Hubtisches 6 nach dem gegenseitigen Anliegen der Werkzeuge 17 wird das Hubtisch-Unterteil 10 gegenüber dem Hubtisch-Oberteil 9 verschoben, was mittels der Schaltfahne 14 und des Sensors 15 detektiert wird. Wird dieses Sensorsignal zu einem nicht erwarteten Zeitpunkt erzeugt, liegt eine Störung des Produktionsprozesses vor, wobei diese Kenntnis von der Störung dazu genutzt wird, über die Motorsteuerung die weitere Verstellung des Hubtisches 6 zu unterbinden, wobei das Stoppen des Hubtisches 6 in der Regel so schnell erfolgt, daß das Hubtisch-Oberteil 9 und das Hubtisch-Unterteil 10 noch keinen unmittelbaren Kontakt haben. Durch die Motorsteuerung wird die Bewegung des Hubtisches 6 zu ekehrt, um die Produktionsstörung beseitigen und nachfolgend einen neuen Takt starten zu können. Wird das Sensorsignal zu dem erwarteten Zeitpunkt erzeugt, wird die Verstellung des Hubtisches 6 ungestört fortgesetzt, so daß das Hubtisch-Unterteil 10 an dem Hubtisch-Oberteil 9 unter Überwindung der Federkraft unmittelbar zur Anlage kommt und so die volle Kraft in die Werkzeuge 17 eingeleitet werden kann.

## Patentansprüche

1. Arbeitsstation mit einem Stationsrahmen (2), in dem über Führungssäulen (3) eine Sockeltraverse (4) und eine Deckeltraverse (5) miteinander verbunden sind, zwischen denen auf den Führungssäulen (3) höhenverstellbar ein Hubtisch (6) angeordnet ist, **dadurch gekennzeichnet, daß** der Hubtisch (6) zweiteilig mit einem Hubtisch-Oberteil (9) und einem Hubtisch-Unterteil (10) gebildet ist, zwischen denen ein Federelement (12) angeordnet ist, das in seiner Ruhelage einen gegenseitigen Abstand (13) von dem Hubtisch-Oberteil (9) und dem Hubtisch-Unterteil (10) bewirkt.

2. Arbeitsstation nach Anspruch 1, **dadurch gekennzeichnet, daß** das Federelement (12) als Druckfeder (11) gestaltet ist.

3. Arbeitsstation nach Anspruch 1 oder 2, **dadurch gekennzeichnet, daß** dem einem von dem Hubtisch-Oberteil (9) oder Hubtisch-Unterteil (10) eine Schaltfahne (14) und dem anderen ein Sensor (15) zur Erfassung einer Lageänderung der Schaltfahne (14) zugeordnet ist.

4. Arbeitsstation nach Anspruch 3, **dadurch gekennzeichnet, daß** die Schaltfahne (14) einstellbar, d.h. hinsichtlich ihrer Lage gegenüber dem sie tragenden Hubtisch-Oberteil (9) oder Hubtisch-Unterteil (10) veränderbar befestigt ist.

5. Arbeitsstation nach einem der Ansprüche 1 bis 4, **dadurch gekennzeichnet, daß** zur Höhenverstellung des Hubtisches (6) eine Antriebswelle vorgesehen ist.

6. Arbeitsstation nach Anspruch 5, **dadurch gekennzeichnet, daß** die Antriebswelle als Exzenterwelle (7) gestaltet ist, auf der eine den Hubtisch (6) tragende Pleuelstange (8) angeordnet ist.

7. Arbeitsstation nach Anspruch 5 oder 6, **dadurch gekennzeichnet, daß** der Antriebswelle ein Antriebsmotor mit einer Motorsteuerung zugeordnet ist.

8. Arbeitsstation nach Anspruch 7, **dadurch gekennzeichnet, daß** der Sensor (15) über Datenleitungen (16) mit der Motorsteuerung verbunden ist zur Auswertung der Sensordaten hinsichtlich des Antriebs des Antriebsmotors über die Motorsteuerung.
